# EUROPÄISCHE PATENTSCHRIFT

(11) **EP 2 125 451 B1**
(45) Veröffentlichungstag und Bekanntmachung des Hinweises auf die Patenterteilung: **20.03.2013**
(21) Anmeldenummer: 08701512.9
(22) Anmeldetag: 16.01.2008
(51) Int. Cl.: B60R 25/00, G07C 9/00

(54) **MOBILER IDENTIFIKATIONSGEBER EINES SICHERHEITSSYSTEMES**
MOBILE IDENTIFICATION TRANSMITTER OF A SECURITY SYSTEM
DISPOSITIF D'IDENTIFICATION MOBILE D'UN SYSTEME DE SECURITE

(30) Priorität: 22.01.2007 DE 102007004063
(43) Veröffentlichungstag der Anmeldung: 02.12.2009
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Vogel, Andreas
(86) Internationale Anmeldenummer: PCT/EP2008/050426
(87) Internationale Veröffentlichungsnummer: WO 2008/090062

(56) Entgegenhaltungen:
- DE-A1-102004 054 134
- DE-B3-102004 039 835

## Beschreibung

Die Erfindung betrifft einen mobilen Identifikationsgeber eines Sicherheitssystems für eine schlüssellose Aktivierung einer Schließvorrichtung eines Kraftfahrzeuges, mit einem Gehäuse, in dem eine Elektronikeinheit mit einer Sende- und Empfangseinheit angeordnet ist, die mit einer kraftfahrzeugseitigen Sende- und Empfangseinheit in Kommunikation steht, bei der eine Identifikationsprüfung zur Feststellung einer Benutzerberechtigung durchgeführt wird.

Mobile Identifikationsgeber werden bei zahlreichen Anwendungen bei Kraftfahrzeugen zur Erhöhung des Bedienerkomforts eingesetzt. Herkömmlich werden Infrarotsysteme oder Funksysteme verwendet, bei denen der berechtigte Benutzer aktiv den Identifikationsgeber betätigt, um ein Signal zur Basisstation, beispielsweise an eine im Kraftfahrzeug vorgesehene Elektronikeinheit, zum Öffnen des Fahrzeuges zu übermitteln. Diese Systeme werden auch als Active Keyless-Entry-Systeme bezeichnet.

Zusehends eine Marktverbreitung finden elektronische Sicherheitssysteme für Schließvorrichtungen von Kraftfahrzeugen, die neben der beschriebenen bedienungsabhängigen Funktionalität zusätzlich mit einer bedienungsunabhängigen Funktionalität, der sogenannten "Passive Keyless-Entry" oder "Keyless-go" Funktionalität, ausgestattet sind. Ausschlaggebend sind die Komfortvorteile für die Bedienung durch den Benutzer. Im Gegensatz zur konventionellen Fernbedienung ist bei der "Passive Keyless-Entry-Funktionalität" keine aktive Bedienung des mobilen Identifikationsgebers zur Ver-und Entriegelung (Sicherung und Entsicherung) der Schließvorrichtung oder zur Ansprechung der Wegfahrsperre notwendig. Beispielsweise wird bei der Betätigung des Türgriffes des Kraftfahrzeuges eine Kommunikation zwischen dem Kraftfahrzeug und dem Identifikationsgeber gestartet und bei positiver ldentifikationsprüfung (Authentifikation) die elektrische Entriegelung der Schließvorrichtung aktiviert. Das bedeutet, dass der einen gültigen Identifikationsgeber mitführende Benutzer sein Kraftfahrzeug öffnen kann, ohne aktiv den Identifikationsgeber betätigen zu müssen. Beispielsweise ist ein Zugangsberechtigungsverfahren bekannt, das bei Betätigung des Türgriffes ein Sendeimpuls über eine induktive Antenne zum Identifikationsgeber übertragen wird. Der Identifikationsgeber wird daraufhin geweckt und sendet ein Funksignal der kraftfahrseitigen Sende- und Empfangseinheit, die dieses Signal zum Steuergerät für die Zugangsberechtigung weiterleitet. Wird hier der richtige Code erkannt, so wird die elektrische Türentriegelung durch entsprechende Ansteuerung der Tür-/Steuergeräte aktiviert. Dasselbe kann bei einer Türschließung durch Berührung des Türgriffes erfolgen.

Weitere mobile Identifikationsgeber für eine schlüssellose Aktivierung einer Schließvorrichtung sind beispielsweise in der DE 102 004 054 134 in der DE 198 45 649 A1 und in der DE 101 06 956 A1 offenbart.

Ausgehend von dem zuvor erwähnten Stand der Technik ist es Aufgabe der vorliegenden Erfindung, einen bestehenden mobilen Identifikationsgeber eines Sicherheitssystems für eine schlüssellose Aktivierung einer Schließvorrichtung eines Kraftfahrzeuges, welches als Active Keyless-Entry-System ausgestaltet ist, auf eine einfache Art und Weise zu einem Passive Keyless-Entry-System umzurüsten. Dabei soll die bestehende Elektronik dieses Sicherheitssystems möglichst weiter genutzt werden können.

Zur Lösung dieser Aufgabe wird ein Identifikationsgeber mit den Merkmalen des Anspruches 1 vorgeschlagen. In den abhängigen Ansprüchen 2 bis 8 sind bevorzugte Weiterbildungen ausgeführt.

Dazu ist erfindungsgemäß vorgesehen, dass ein erstes Kommunikationsmodul vorgesehen ist, das autark zur Elektronikeinheit innerhalb des Gehäuses angeordnet ist und permanent ein Funksignal aussendet, das durch das Sicherheitssystem empfangbar ist, welches eine Präsenz des Identifikationsgebers am Kraftfahrzeug erkennt.

Das erste Kommunikationsmodul ist unabhängig von der Elektronikeinheit des Identifikationsgebers am Gehäuse befestigt und sendet permanent, insbesondere im regelmäßigen oder unregelmäßigen zeitlichen Abständen, ein Funksignal aus. Nähert sich der Benutzer dem Kraftfahrzeug, erkennt das Sicherheitssystem ab einem definierten Abstand zum Kraftfahrzeug die Präsenz und die Annäherung des Identifikationsgebers. Anschließend löst das Sicherheitssystem die Identifikationsprüfung zur Feststellung einer Benutzerberechtigung, insbesondere einer Zugangsberechtigung aus. Bei positiver ldentifikationsprüfung erfolgt eine automatische Aktivierung der Schließvorrichtung, das bedeutet, dass beim Einstiegsvorgang in das Kraftfahrzeug die Schließvorrichtung entsichert bzw. entriegelt wird. Der Benutzer kann durch Betätigung der Handhabe des Kraftfahrzeuges die Tür öffnen und in das Kraftfahrzeug einsteigen. Durch die Integration des ersten Kommunikationsmoduls am mobilen Identifikationsgeber kann das erwähnte Active Keyless-Entry-System auf ein Passive Keyless-Entry-System auf einfache Weise umgerüstet werden. Damit das vom ersten Kommunikationsmodul ausgehende Funksignal vom Sicherheitssystem empfangen werden kann, kann vorgesehen sein, dass ein zweites Kommunikationsmodul innerhalb einer kraftfahrzeugseitigen Elektronikeinheit integriert ist, die Bestandteil des Sicherheitssystems zur Feststellung einer Zugangsberechtigung ist. Das bedeutet, dass das zweite Kommunikationsmodul bereits Bestandteil des Active Keyless-Entry-Systems sein kann. Hierbei ist es vorteilhaft, dass das zweite Kommunikationsmodul die kraftfahrzeugseitige Sende- und Empfangseinheit mit umfasst, die vorteilhafterweise derart ausgeführt ist, dass diese sowohl das Funksignal empfangen als auch Signale für die Identifikationsprüfung empfangen und aussenden kann. Das zweite Kommunikationsmodul, das in Datenverbindung mit dem Sicherheitssystem steht, kann somit Bestandteil der fahrzeugseitigen Elektronikeinheit sein.

In einer weiteren Alternative der Erfindung kann das zweite Kommunikationsmodul als zusätzliche Einheit kraftfahrzeugseitig angeordnet werden, wobei es mit dem ursprünglichen Sicherheitssystem in Datenverbindung gebracht wird. In einer möglichen Ausführungsform der Erfindung kann das zweite Kommunikationsmodul an einem außenliegenden Fahrzeugteil, beispielsweise Außenspiegel, angeordnet sein. Alternativ kann das zweite Kommunikationsmodul innerhalb des Kraftfahrzeuges vorgesehen sein kann und mit dem Sicherheitssystem in Datenverbindung stehen. Hierbei ist es von Vorteil, dass das zweite Kommunikationsmodul, das getrennt von der kraftfahrzeugseitigen Sende- und Empfangseinheit angeordnet ist, eine eigene Empfangseinheit zum Empfang des Funksignals aufweist.

Eine weitere vorteilhafte Ausgestaltung sieht vor, dass bei der Identifikationsprüfung die Sende- und Empfangseinheit ein von außerhalb des Identifikationsgebers erzeugtes erstes Signal empfängt und zur Elektronikeinheit leitet, die eine erste Identifizierungsprüfung des ersten Signals durchführt und bei positiver Feststellung einer Identifikation ein zweites Signal veranlasst, das über die Sende- und Empfangseinheit ausgesendet wird, von der kraftfahrzeugseitigen Sende- und Empfangseinheit empfangen wird und fahrzeugseitig in einer zweiten Identifizierungsprüfung überprüft wird. Vorteilhafterweise sind das erste und das zweite Signal codierte und/oder modulierte Signale. Hierbei kann das erste Signal mit einer Zufallszahl versehen sein. Besonders vorteilhaft ist, dass das zweite Signal erst dann ausgesendet wird, wenn die Elektronikeinheit des Identifikationsgebers bei ihrer Überprüfung festgestellt hat, dass das entsprechende richtige erste Signal empfangen wurde. In anderen Worten ausgedrückt sendet das Fahrzeug eine über einen Zahlencode verschlüsselte Anfrage als erstes Signal an den Identifikationsgeber, auf die nur der richtige Identifikationsgeber die entsprechende Antwort in Form des zweiten Signals kennt. Die Kommunikation der beiden Teilnehmer, Fahrzeug und Identifikationsgeber, läuft vorzugsweise immer unterschiedlich ab, so dass sowohl das erste Signal als auch das zweite Signal immer unterschiedlich sind, und ein Aufzeichnen somit zwecklos ist.

Das zweite Signal wird in einer bevorzugten Alternative der Erfindung über einen Algorithmus berechnet, welches vorteilhafterweise über einen in der Elektronikeinheit des Identifikationsgebers angeordneten Mikrocontroller erfolgt. Hierbei kann die Elektronikeinheit eine Steuereinheit aufweisen, die nach dem Empfang des ersten Signals einen entsprechenden Identifikationscode ausliest, der in einer Speichereinheit innerhalb der Elektronikeinheit gespeichert sein kann. Die Steuereinheit kann anschließend eine Funkeinheit aktivieren, die das zweite Signal generiert, in der der entsprechende Identifikationscode enthalten ist und über die Sende- und Empfangseinheit zum Kraftfahrzeug ausgesendet wird. Bei dem ersten und dem zweiten Signal kann es sich beispielsweise um ein LF-Signal (Low Frequenz-Signal/Niederfrequenzsignal) und/oder um ein HF-Signal (High Frequenz-Signal/Hochfrequenzsignal) handeln.

In einer möglichen Ausführungsform der Erfindung befindet sich das Funksignal innerhalb des Frequenzbereiches f, der zwischen 2,402 GHz ≤ f ≤ 2,480 GHz liegt. Vorteilhafterweise weist das Gehäuse des Identifikationsgebers eine Aufnahme auf, in der das erste Kommunikationsmodul ohne erheblichen Aufwand eingebracht und befestigt werden kann. Bei der Aufnahme kann es sich beispielsweise um eine Öffnung innerhalb des Identifikationsgebers handeln, in der der mechanische Notschlüssel normalerweise eingesetzt ist. Durch die Entfernung des Notschlüssels kann in die Aufnahme leicht das erste Kommunikationsmodul eingebracht sein. Vorteilhafterweise ist das erste Kommunikationsmodul innerhalb der erfindungsgemäßen Aufnahme form- und/oder kraft-und/oder stoffschlüssig befestigt. In einer weiteren Alternative der Erfindung weist das erste Kommunikationsmodul eine Sendeeinheit mit einer eigenen Energieversorgung auf. Zweckmäßigerweise ist bei dieser Ausführungsform das erste Kommunikationsmodul in der Aufnahme des Identifikationsgebers lösbar befestigt. Bei der Energieversorgung kann es sich beispielsweise um eine Batterie handeln, die im Kommunikationsmodul eingelegt ist. Falls die Energieversorgung für das Aussenden des Funksignals nicht mehr ausreicht, kann das erste Kommunikationsmodul aus der Aufnahme herausgezogen werden, wobei gleichzeitig eine neue Batterie eingelegt werden kann. Anschließend kann das erste Kommunikationsmodul wieder in die Aufnahme des Identifikationsgebers eingeschoben werden.

Des Weiteren wird die genannte Aufgabe durch ein Sicherheitssystem für eine schlüssellose Aktivierung einer Schließvorrichtung eines Kraftfahrzeuges gemäß des Anspruches 9 gelöst. In den abhängigen Ansprüchen 10 bis 17 sind bevorzugte Ausführungsformen des Sicherheitssystems vorgeschlagen. Einer der Vorteile dieser Erfindung ist, dass das Sicherheitssystem ohne erheblichen Aufwand aus einem bestehenden Active Keyless-Entry-System zu einem Passive Keyless-Entry-System umgerüstet werden kann. Hierbei ist das zweite Kommunikationsmodul als ständig "horchendes" Element ausgeführt, um jederzeit das Funksignal des ersten Kommunikationsmoduls empfangen zu können. Das Funksignal dient hierbei als eine Art Wecksignal für die Identifikationsprüfung.

Ferner wird die genannte Aufgabe durch ein Verfahren zum Betrieb eines Sicherheitssystems für eine schlüssellose Aktivierung einer Schließvorrichtung gemäß des Anspruches 18 gelöst. In den abhängigen Ansprüchen 19 bis 22 sind bevorzugte Ausführungsformen des erfindungsgemäßen Verfahrens vorgeschlagen. Vorteilhafterweise weist das Verfahren für ein Einstiegsvorgang in das Kraftfahrzeug folgende Schritte auf: Das Sicherheitssystem ist derart konfiguriert, dass erst in einem definierten Abstand zwischen dem ersten und dem zweiten Kommunikationsmodul das Funksignal von dem zweiten Kommunikationsmodul empfangen wird. Anschließend spricht das zweite Kommunikationsmodul eine kraftfahrzeugseitige Elektronikeinheit des Sicherheitssystems an. Im Anschluss wird eine bidirektionale Kommunikation bei der Identifikationsprüfung zwischen dem Identifikationsgeber und der kraftfahrzeugseitigen Elektronikeinheit durchgeführt. Bei einer positiven Identifikation erfolgt eine Aktivierung der Schließvorrichtung, insbesondere eine Entsicherung bzw. Entriegelung der Schließvorrichtung.

Für den Ausstiegsvorgang aus dem Kraftfahrzeug kann das Verfahren derart ausgeführt sein, dass das Sicherheitssystem detektiert, inwieweit das erste Kommunikationsmodul sich außerhalb einer Fahrzeugreichweite befindet. Liegt dieses Ereignis vor, erfolgt eine Aktivierung der Schließvorrichtung, insbesondere eine Sicherung bzw. Verriegelung der Schließvorrichtung. Während sich der Benutzer während der Fahrt innerhalb des Kraftfahrzeuges befindet, sendet das erste Kommunikationsmodul kontinuierlich das Funksignal aus. Vorteilhafterweise erkennt das Sicherheitssystem beim Ausstiegsvorgang des Benutzers, dass der Identifikationsgeber sich vom Fahrzeuginnenraum in den Fahrzeugaußenraum geführt wurde. Vorteilhafterweise ist das Sicherheitssystem derart ausgeführt, dass trotz des permanent aussendenden Funksignals des ersten Kommunikationsmoduls eine Identifikationsprüfung zwischen dem Identifikationsgeber und der kraftfahrzeugseitigen Elektronikeinheit nunmehr nicht erfolgt. Der Benutzer kann sich dem Kraftfahrzeug entfernen, welches durch das Sicherheitssystem erkannt wird und eine Sicherung der Schließvorrichtung vornimmt, insbesondere wenn das erste Kommunikationsmodul sich außerhalb der Reichweite des zweiten Kommunikationsmoduls befindet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht des erfindungsgemäßen Sicherheitssystems mit einem mobilen Identifikationsgeber und einer Schließvorrichtung eines Kraftfahrzeuges und
- Fig. 2: ein erfindungsgemäßes Verfahren zum Betrieb des Sicherheitssystems.

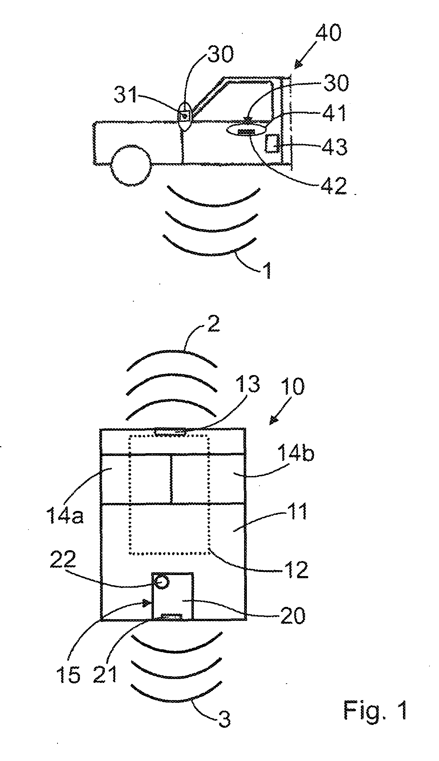

In Fig. 1 ist ein mobiler Identifikationsgeber 10 eines Sicherheitssystems für eine schlüssellose Aktivierung einer Schließvorrichtung 43 eines Kraftfahrzeuges 40 dargestellt. Der Identifikationsgeber 10 ist mit einem Gehäuse 11 ausgeführt, in dem eine Elektronikeinheit 12 mit einer Sende- und Empfangseinheit 13 angeordnet ist. Auf der Oberseite des Identifikationsgebers 10 sind im vorliegenden Ausführungsbeispiel zwei Auslöseelemente 14a, 14b vorgesehen, die mit der Elektronikeinheit 12 in Signalverbindung stehen. Der vorliegende Identifikationsgeber 10 ist Bestandteil eines ursprünglichen Active Keyless-Entry-Systems, bei dem durch Betätigung des Auslöseelementes 14a eine Entsicherung der Schließvorrichtung 43 auslösbar ist und durch eine Betätigung des Auslöseelementes 14b eine Sicherung der Schließvorrichtung 43 bewirkbar ist. Bei Betätigung eines der Auslöseelemente 14a,14b wird eine Identifikationsprüfung zur Feststellung einer Benutzerberechtigung durchgeführt, worauf im Folgenden noch eingegangen wird.

Der Identifikationsgeber 10 weist eine Aufnahme 15 auf, in der ein erstes Kommunikationsmodul 20 mit einer Sendeeinheit 21 eingebracht ist. In diese Aufnahme 15 war ursprünglich ein Notschlüssel eingesetzt. Allein durch die Anordnung des ersten Kommunikationsmoduls 20 in die Aufnahme 15 kann das ursprüngliche Active Keyless-Entry-System in ein Passive Keyless-Entry-System umgerüstet werden. Das erste Kommunikationsmodul 20 ist hierbei autark, dass heißt unabhängig zur Elektronikeinheit 12 des Identifikationsgebers 10 ausgeführt und sendet permanent ein Funksignal 3 aus. Im vorliegenden Ausführungsbeispiel arbeitet das erste Kommunikationsmodul 20 nach dem Bluetooth Standard. Alternativ kann ein Kommunikationsmodul 20 vorgesehen sein, das nach dem IrDA, ZigBee, WiFi oder nach dem WiMAX Standard betrieben wird. Wie in Fig. 1 zu erkennen ist, weist das erste Kommunikationsmodul 20 eine eigene Energieversorgung 22 in Form einer Batterie auf.

Am Kraftfahrzeug 40 ist eine Sende- und Empfangseinheit 42 innerhalb eines Türgriffes 41 angeordnet. Diese Sende- und Empfangseinheit 42 ist mit einer nicht dargestellten Elektronikeinheit in Datenverbindung, die im vorliegenden Ausführungsbeispiel ebenfalls im Türgriff 41 integriert ist. Die Elektronikeinheit 12 mit der Sende- und Empfangseinheit 42 ist ebenfalls Bestandteil des ursprünglichen Active Keyless-Entry-Systems. Damit das Sicherheitssystem das Funksignal 3 kraftfahrzeugseitig empfangen kann, ist die Sende-und Empfangseinheit 42 derart ausgeführt, dass diese neben den Signalen für die Identifikationsprüfung zur Feststellung einer Benutzerberechtigung im Rahmen des ursprünglichen Active Keyless-Entry-Systems zusätzlich das vom ersten Kommunikationsmodul 20 ausgehende Funksignal 3 empfangen kann. Hierbei ist die kraftfahrzeugseitige Sende- und Empfangseinheit 42 ständig für ein Funksignal 3 empfangsbereit. Somit stellt die kraftfahrzeugseitige Sende- und Empfangseinheit 42 ein Bestandteil eines zweiten Kommunikationsmodul 30 dar, welches ein nach dem Signal 3 ständig horchendes Bauteil ist.

In einer alternativen Ausführungsform, die ebenfalls in Fig. 1 schematisch dargestellt ist, kann das zweite Kommunikationsmodul 30 ein zusätzliches Bauteil zum ursprünglichen Active Keyless-Entry-System sein. Hierbei weist das zweite Kommunikationsmodul 30 eine eigene Empfangseinheit 31 auf, die getrennt von der kraftfahrzeugseitigen Sende-und Empfangseinheit 42 am Kraftfahrzeug 40 angeordnet ist. Gemäß Fig. 1 ist das zweite Kommunikationsmodul 30 am außenliegenden Kraftfahrzeugspiegel integriert. Des Weiteren ist das zweite Kommunikationsmodul 30 mit dem kraftfahrzeugseitigen Sicherheitssystem in Datenverbindung.

Das erfindungsgemäße Sicherheitssystem ist gemäß dem dargestellten Ausführungsbeispiel derart eingestellt, dass eine vordefinierte Reichweite des ersten und des zweiten Kommunikationsmoduls 20, 30 vorgesehen ist, bei der lediglich eine Kommunikation zwischen beiden Modulen 20, 30 von weniger als 2 m möglich ist.

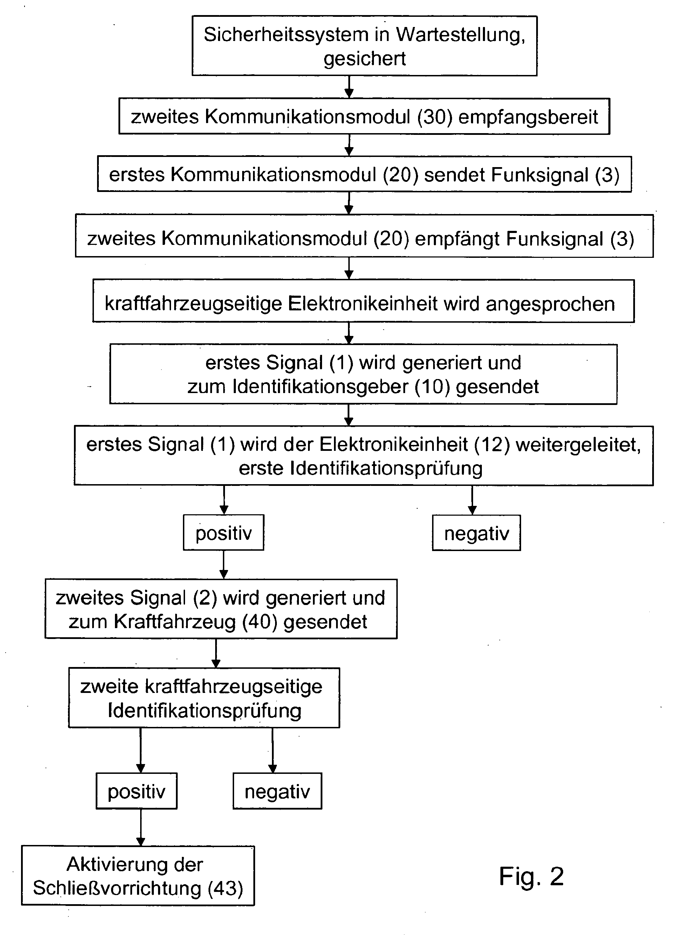

Nähert sich nun der den Identifikationsgeber 10 tragende Benutzer dem Fahrzeug 40, werden unterschiedliche Verfahrensschritte durch das Sicherheitssystem durchlaufen, die in Fig. 2 dargestellt sind. Der Identifikationsgeber 10 sendet ständig sein Funksignal 3 aus, welches entweder in der ersten Alternative von der Sende- und Empfangseinheit 42 empfangen wird oder durch die Empfangseinheit 31 des zweiten Kommunikationsmoduls 30 detektiert wird. In beiden Fällen wird die kraftfahrzeugseitige Elektronikeinheit des Sicherheitssystems angesprochen. Anschließend erfolgt eine bidirektionale Kommunikation, die in Form des Active Keyless-Entry-Systems abläuft. Hierbei wird eine Identifikationsprüfung zwischen dem Identifikationsgeber 10 und der kraftfahrzeugseitigen Elektronikeinheit durchgeführt. Die kraftfahrzeugseitige Elektronikeinheit generiert ein erstes Signal 1, das über die Sende- und Empfangseinheit 42 der Sende- und Empfangseinheit 13 des Identifikationsgebers 10 gesendet wird. Im nächsten Schritt leitet die Sende- und Empfangseinheit 13 das empfangene erste Signal 1 der Elektronikeinheit 12 des Identifikationsgebers 10 weiter und führt eine erste Identifikationsprüfung durch. Bei einer positiven ersten Identifikationsprüfung generiert die Elektronikeinheit 12 ein zweites Signal 2, das über die Sende- und Empfangseinheit 13 des Identifikationsgebers 10 der kraftfahrzeugseitigen Sende- und Empfangseinheit 42 gesendet wird. Abschließend wird das zweite Signal 2 der fahrzeugseitigen Elektronikeinheit 42 weitergeleitet, die eine zweite Identifikationsprüfung durchführt. Bei positiver zweiter Identifikation erfolgt eine Entsicherung der Schließvorrichtung 43. Der Benutzer kann durch eine Betätigung des Türgriffes 41 die entsicherte Tür öffnen und in das Kraftfahrzeug 40 einsteigen.

Liegt keine positive erste oder zweite Identifikation vor, wird kein zweites Signal 2 oder keine Aktivierung der Schließvorrichtung 43 ausgelöst. Das Sicherheitssystem kann in einer weiteren nicht explizit dargestellten Alternative derart ausgestaltet sein, dass bei der Kommunikation zwischen dem ersten und dem zweiten Kommunikationsmodul 20, 30 ebenfalls eine Identifikation durchgeführt wird. Erst wenn das zweite Kommunikationsmodul 30 eine positive Identifikation feststellt, wird die kraftfahrzeugseitige Elektronikeinheit des Sicherheitssystems angesprochen, die anschließend die oben beschriebene bidirektionale Kommunikation für die Identifikationsprüfung zwischen dem Identifikationsgeber 10 und der kraftfahrzeugseitigen Elektronikeinheit durchführt.

Der Ausstiegsvorgang aus dem Kraftfahrzeug 40 kann in der Art erfolgt, dass eine Sicherung der Schließvorrichtung 43 erst dann erfolgt, wenn das erste Kommunikationsmodul 20 sich außerhalb der Fahrzeugreichweite befindet. Eine Sicherung oder Entsicherung der Schließvorrichtung 43 über die Auslöseelemente 14a, 14b ist alternativ durch Betätigung ebenfalls auslösbar. Hierbei ist das intelligente Sicherheitssystem derart ausgeführt, dass bei Betätigung des Auslöseelementes 14b zur Sicherung der Schließvorrichtung 43 eine Überprüfung des Sicherheitssystems, inwieweit der Identifikationsgeber 10 sich innerhalb der Reichweite des Kraftfahrzeuges 40 befindet nicht mehr stattfindet. Durch eine Betätigung des Auslöseelementes 14a kann ebenfalls eine Entsicherung der Schließvorrichtung 43 manuell ausgelöst werden.

### Bezugszeichenliste

- 1: erstes Signal
- 2: zweites Signal
- 3: Funksignal
- 10: Identifikationsgeber
- 11: Gehäuse
- 12: Elektronikeinheit
- 13: Sende- und Empfangseinheit
- 14a: Auslöseelement
- 14b: Auslöseelement
- 15: Aufnahme
- 20: erstes Kommunikationsmodul
- 21: Sendeeinheit
- 22: Energieversorgung, Batterie
- 30: zweites Kommunikationsmodul
- 31: Empfangseinheit
- 40: Kraftfahrzeug
- 41: Handhabe, Türgriff
- 42: Sende- und Empfangseinheit
- 43: Schließvorrichtung

## Patentansprüche

1. Mobiler Identifikationsgeber (10) eines Sicherheitssystems für eine schlüssellose Aktivierung einer Schließvorrichtung (43) eines Kraftfahrzeuges (40), mit einem Gehäuse (11), in dem eine Elektronikeinheit (12) mit einer Sende- und Empfangseinheit (13) angeordnet ist, die mit einer kraftfahrzeugseitigen Sende- und Empfangseinheit (42) in Kommunikation steht, bei der eine Identifikationsprüfung zur Feststellung einer Benutzerberechtigung durchgeführt wird,
**dadurch gekennzeichnet,**
**dass** ein erstes Kommunikationsmodul (20) vorgesehen ist, das autark zur Elektronikeinheit (12) innerhalb des Gehäuses (11) angeordnet ist und permanent ein Funksignal (3) aussendet, das durch das Sicherheitssystem empfangbar ist, welches eine Präsenz des Identifikationsgebers (10) am Kraftfahrzeug (40) erkennt.

2. Mobiler Identifikationsgeber (10) nach Anspruch 1,
**dadurch gekennzeichnet,**
**dass** das Funksignal (3) von einem zweiten Kommunikationsmodul (30) empfangbar ist, das kraftfahrzeugseitig angeordnet ist und mit dem Sicherheitssystem in Datenverbindung steht.

3. Mobiler Identifikationsgeber (10) nach Anspruch 1 oder 2,
**dadurch gekennzeichnet,**
**dass** bei der Identifikationsprüfung die Sende- und Empfangseinheit (13) ein von außerhalb des Identifikationsgebers (10) erzeugtes erstes Signal (1) empfängt und zur Elektronikeinheit (12) leitet, die eine erste Identifizierungsprüfung des ersten Signals (1) durchführt und bei positiver Feststellung einer Identifikation ein zweites Signal (2) veranlasst, das über die Sende- und Empfangseinheit (13) ausgesendet wird, von der kraftfahrzeugseitigen Sende- und Empfangseinheit (42) empfangen wird und fahrzeugseitig in einer zweiten Identifizierungsprüfung überprüft wird.

4. Mobiler Identifikationsgeber (10) nach einem der vorhergehenden Ansprüche,
**dadurch gekennzeichnet,**
**dass** das Funksignal (3) sich innerhalb des Frequenzbereiches f befindet, der zwischen 2,402 GHz ≤ f ≤ 2,480 GHz liegt.

5. Mobiler Identifikationsgeber (10) nach einem der vorhergehenden Ansprüche,
**dadurch gekennzeichnet,**
**dass** mindestens ein von Außen betätigbares, mit der Elektronikeinheit (12) in Signalverbindung stehendes Auslöseelement (14a,14b) vorgesehen ist, wobei bei einer Betätigung des Auslöseelementes (14a,14b) die Identifikationsprüfung gestartet wird.

6. Mobiler Identifikationsgeber (10) nach einem der vorhergehenden Ansprüche,
**dadurch gekennzeichnet,**
**dass** das erste Kommunikationsmodul (20) in einer Aufnahme (15) des Gehäuses (11) befestigt ist, wobei insbesondere anstelle des ersten Kommunikationsmoduls (20) in die Aufnahme (15) ein Notschlüssel einsetzbar ist.

7. Mobiler Identifikationsgeber (10) nach einem der vorhergehenden Ansprüche,
**dadurch gekennzeichnet,**
**dass** das erste Kommunikationsmodul (20) eine Sendeeinheit (21) mit einer Energieversorgung (22) aufweist.

8. Sicherheitssystem für eine schlüssellose Aktivierung einer Schließvorrichtung (43) eines Kraftfahrzeuges (40), mit
einem mobilen Identifikationsgeber (10), der ein Gehäuse (11) aufweist, in dem eine Elektronikeinheit (12) mit einer Sende- und Empfangseinheit (13) angeordnet ist, die mit einer Sende- und Empfangseinheit (42) einer fahrzeugseitigen Elektronikeinheit in Kommunikation steht, bei der eine Identifikationsprüfung zur Feststellung einer Benutzerberechtigung durchgeführt wird,
**dadurch gekennzeichnet,**
**dass** ein erstes Kommunikationsmodul (20) vorgesehen ist, das autark zur Elektronikeinheit (12) innerhalb des Gehäuses (11) angeordnet ist und permanent ein Funksignal (3) aussendet, das durch das Sicherheitssystem empfangbar ist, welches eine Präsenz des Identifikationsgebers (10) am Kraftfahrzeug (40) erkennt.

9. Sicherheitssystem nach Anspruch 8,
**dadurch gekennzeichnet,**
**dass** das Funksignal (3) von einem zweiten Kommunikationsmodul (30) empfangbar ist, das kraftfahrzeugseitig angeordnet ist und mit dem Sicherheitssystem in Datenverbindung steht, wobei insbesondere das zweite Kommunikationsmodul (30) Bestandteil der fahrzeugseitigen Elektronikeinheit ist, wobei die kraftfahrzeugseitige Sende- und Empfangseinheit (42) derart ausgeführt ist, dass diese sowohl das Funksignal (3) empfangen als auch Signale (1,2) für die Identifikationsprüfung empfangen und aussenden kann, wobei insbesondere das zweite Kommunikationsmodul (30) eine Empfangseinheit (31) aufweist, die getrennt von der kraftfahrzeugseitigen Sende- und Empfangseinheit (42) am Kraftfahrzeug (40) angeordnet ist.

10. Sicherheitssystem nach Anspruch 8.
**dadurch gekennzeichnet,**
**dass** die Sende- und Empfangseinheit (42) in einer Handhabe (41) integriert ist.

11. Sicherheitssystem nach Anspruch 8,
**dadurch gekennzeichnet,**
**dass** die Reichweite des ersten und des zweiten Kommunikationsmoduls (20,30) derart ausgeführt ist, dass eine Kommunikation zwischen beiden Modulen (20,30) lediglich von weniger als 2m möglich ist.

12. Sicherheitssystem nach Anspruch 8,
**dadurch gekennzeichnet,**
**dass** das die Sende- und Empfangseinheit (42) ein Teil eines bestehenden Active Keyless-Entry-Systems ist, wobei durch Integration des ersten Kommunikationsmoduls (20) das Sicherheitssystem die Funktion eines Passive Keyless-Entry-Systems aufweist.

13. Sicherheitssystem nach Anspruch 8,
**dadurch gekennzeichnet,**
**dass** das zweite Kommunikationsmodul (30) an einem außenliegenden Fahrzeugteil angeordnet ist.

14. Sicherheitssystem nach einem der Ansprüche 8 bis 13 mit einem Identifikationsgeber (10) nach einem der vorhergehenden Ansprüche.

15. Verfahren eines Sicherheitssystems für eine schlüssellose Aktivierung einer Schließvorrichtung (43) eines Kraftfahrzeuges (40), mit
einem mobilen Identifikationsgeber (10), der ein Gehäuse (11) aufweist, in dem eine Elektronikeinheit (12) mit einer Sende- und Empfangseinheit (13) angeordnet ist, die mit einer kraftfahrzeugseitigen Sende- und Empfangseinheit (42) in Kommunikation steht, bei der eine Identifikationsprüfung zur Feststellung einer Benutzerberechtigung durchgeführt wird,
**dadurch gekennzeichnet,**
**dass** das Gehäuse (11) ein erstes Kommunikationsmodul (20) aufweist, das autark zur Elektronikeinheit (12) innerhalb des Gehäuses (11) angeordnet ist und das permanent ein Funksignal (3) aussendet, das durch ein kraftfahrzeugseitiges zweites Kommunikationsmodul (30), das mit dem Sicherheitssystem in Datenverbindung steht, empfangen wird, wodurch eine Präsenz des Identifikationsgebers (10) am Kraftfahrzeug (40) durch das Sicherheitssystem erkannt wird.

16. Verfahren nach Anspruch 15,
**gekennzeichnet durch** folgende Schritte für einen Einstiegsvorganges in das Kraftfahrzeug (40), dass:
(1) erst in einem definierten Abstand zwischen dem ersten und dem zweiten Kommunikationsmodul (20,30) das Funksignal (3) von dem zweiten Kommunikationsmodul (30) empfangen wird,
(2) das zweite Kommunikationsmodul (30) eine kraftfahrzeugseitige Elektronikeinheit des Sicherheitssystems anspricht,
(3) eine bidirektionale Kommunikation bei der Identifikationsprüfung zwischen dem Identifikationsgeber (10) und der kraftfahrzeugseitigen Elektronikeinheit durchführt wird und
(4) bei positiver Identifikation eine Aktivierung der Schließvorrichtung (43) erfolgt.

17. Verfahren nach Anspruch 16,
**dadurch gekennzeichnet,**
**dass** gemäß Schritt (3)
(a) die kraftfahrzeugseitige Elektronikeinheit ein erstes Signal (1) generiert,
(b) über die Sende- und Empfangseinheit (42) das erste Signal (1) der Sende-und Empfangseinheit (13) des Identifikationsgebers (10) gesendet wird,
(c) die Sende- und Empfangseinheit (13) das erste Signal (1) der Elektronikeinheit (12) des Identifikationsgebers (10) weiterleitet,
(d) die Elektronikeinheit (12) eine erste Identifikationsprüfung durchführt,
(e) bei einer positiven ersten Identifikationsprüfung die Elektronikeinheit (12) ein zweites Signal (2) generiert, das über die Sende- und Empfangseinheit (13) des Identifikationsgebers (10) der kraftfahrzeugseitigen Sende- und Empfangseinheit (42) gesendet wird und
(f) das zweite Signal (2) der fahrzeugseitigen Elektronikeinheit weitergeleitet wird, die eine zweite Identifikationsprüfung durchführt.

18. Verfahren nach Anspruch 15,
**dadurch gekennzeichnet,**
**dass** beim Ausstiegsvorgang aus dem Kraftfahrzeug (40) das Sicherheitssystem detektiert, inwieweit das erste Kommunikationsmodul (20) sich außerhalb einer Fahrzeugreichweite befindet und eine Aktivierung der Schließvorrichtung (43) erfolgt.

19. Verfahren nach einem der vorhergehenden Ansprüche zum Betreiben eines Sicherheitssystems nach einem der Ansprüche 8 bis 14.

## Claims

1. Mobile identification transmitter (10) of a security system for a keyless activation of a locking mechanism (43) of a motor vehicle (40), with a housing (11), in which an electronic unit (12) with a sending and receiving unit (13) is arranged, which is in communication with a motor vehicle related sending and receiving unit (42), at which an identification control for the determination of a user authorization is performed,
**characterized in that,**
a first communication module (20) is intended, which is assembled to the electronic unit (12) within the housing (11) in a self-sufficient way and which is permanently sending a radio signal (3), which is receivable by the security system, which recognizes a presence of the identification transmitter (10) at the motor vehicle (40).

2. Mobile identification transmitter (10) according to claim 1,
**characterized in that,**
the radio signal (3) is receivable by a second communication module (30), which is assembled in a motor vehicle related way and which is in a data connection with the security system.

3. Mobile identification transmitter (10) according to claim 1 or 2,
**characterized in that,**
during an identification control the sending and receiving unit (13) receives a first signal (1) generated outside the identification transmitter (10) and conducts the signal to the electronic unit (12), which is performing a first identification control of the first signal (1) and triggers a second signal (2) by a positive determination of the identification, which is transmitted via the sending and receiving unit (13) and is received by the motor vehicle related sending and receiving unit (42) and is controlled in a motor vehicle related second identification control.

4. Mobile identification transmitter (10) according to one of the preceding claims,
**characterized in that,**
the radio signal (3) is arranged within a frequency area f, between 2,402 GHz ≤ f ≤ 2,480 GHz.

5. Mobile identification transmitter (10) according to one of the preceding claims,
**characterized in that,**
at least one releasing element (14a, 14b) is intended, which can be operated from the outside and is in a signal connection with the electronic unit (12), wherein upon an actuation of the releasing element (14a,14b) the identification control is started.

6. Mobile identification transmitter (10) according to one of the preceding claims, **characterized in that,**
the first communication module (20) is fixed an a acceptance (15) of the housing (11), wherein particularly instead of the first communication module (20) an emergency key can be inserted into the acceptance (15).

7. Mobile identification transmitter (10) according to one of the preceding claims,
**characterized in that,**
the first communication module (20) comprises a sending unit (31) with an energy supply (22).

8. Security system for a keyless activation of a locking mechanism (43) of a motor vehicle (40), with
a mobile identification transmitter (10), which comprises a housing (11), in which an electronic unit (12) with a sending and receiving unit (13) is assembled, which is in communication with the sending and receiving unit (42) of a motor vehicle related electronic unit, which is conducting an identification control for the determination of a user authorization,
**characterized in that,**
the a first communication module (20) is intended, which is assembled at an electronic unit (12) within a housing (11) in a self-sufficient way, and which is permanently sending a radio signal (3), which is receivable by a security system, which recognizes the presence of the identification transmitter (10) at the motor vehicle (40).

9. Security system according to claim 8,
**charaterized in that,**
the radio signal (3) is receivable by a second communication module (30), which is assembled in a motor vehicle related way and which is in a data connection with a security system, wherein particularly the second communication module (30) is part of the motor vehicle related electronic unit, wherein the motor vehicle related sending and receiving unit (42) is accomplished in a way, that the sending and receiving unit (42) is able to receive a radio signal (3) and is also able to receive and send signals (1,2) for the identification control, wherein particularly the second communication module (30) comprises a receiving unit (31), which is separated from the motor vehicle related sending and receiving unit (42) at the motor vehicle (40).

10. Security system according to claim 8,
**charaterized in that,**
the sending and receiving unit (42) is integrated into a handle (41).

11. Security system according to claim 8,
**charaterized in that,**
the range of the first and the second communication module (20,30) is accomplished in a way that the communication between both modules (20,30) is only possible within a range of 2 m.

12. Security system according to claim 8,
**characterized in that,**
the sending and receiving unit (42) is part of an existing Active Keyless-Entry-System, wherein by integration of the first communication module (20) the security system comprises the function of a Passive Keyless-Entry-System.

13. Security system according to claim 8,
**charaterized in that,**
the second communication module (30) is assembled at an exterior motor vehicle part.

14. Security system according to one of the claims 8 to 13 with an identification transmitter (10) according to one of the preceding claims.

15. Method of a security system for a keyless activation of a locking mechanism (43) of a motor vehicle (40), with
a mobile identification transmitter (10), which comprises a housing (11), in which an electronic unit (12) with a sending and receiving unit (13) is assembled, which is in communication with a motor vehicle related sending and receiving unit (42), by which an identification control for determination of a user authorization is conducted, **characterized in that,**
the housing (11) comprises a first communication module (20), which is assembled a the electronic unit (12) within the housing (11) in a self-sufficient way, and which is permanently sending a radio signal (3), which is received by a motor vehicle related second communication module (30), which is in data communication with a security system, wherein a presence of the identification transmitter (10) at the motor vehicle (40) is recognized by a security system.

16. Method according to claim 15,
**charcterized by** the following steps for the boarding process of the motor vehicle (40):
(1) the radio signal (3) is received by a second communication module (30) not before a defined space between the first and the second communication module (20,30) is established,
(2) that the second communication module (30) is addressing a motor vehicle related electronic unit,
(3) a bidirectional communication between the identification transmitter (10) and the motor vehicle related electronic unit is accomplished during an identification control and
(4) with a positive identification an activation of the locking mechanism (43) is accomplished.

17. Method according to claim 16,
**characterized in that**,
according to step (3)
(a) the motor vehicle related electronic unit is generating a first signal (1),
(b) that the first signal (1) of the sending and receiving unit (13) of the identification transmitter (10) is sent via the sending and receiving unit (42),
(c) the sending and receiving unit (13) is conducting the first signal (1) of the electronic unit (12) of the identification transmitter (10),
(d) the electronic unit (12) conducts a first identification control,
(e) by a positive first identification control the electronic unit (12) generates a second signal (2), which is sent via the sending and receiving unit (13) of the identification transmitter (10) of the motor vehicle related sending and receiving unit (42) and
(f) that the second signal (2) of the motor vehicle related electronic unit is transmitted, which conducts a second identification control.

18. Method according to claim 15,
**characterized in that**,
by deboarding the motor vehicle (40) the security system detects, in how far the first communication module (20) is outside the motor vehicle range and an activation of the locking mechanism (43) occurs.

19. Method according to one of the preceding claims for operating a security system according to claims 8 to 14.

## Revendications

1. Dispositif d'identification mobile (10) d'un système de sécurité pour une activation sans clé d'un dispositif de fermeture (43) d'un véhicule automobile (40), comprenant un boîtier (11) dans lequel est disposée une unité électronique (12) comprenant une unité d'émission et de réception (13) qui est en communication avec une unité d'émission et de réception côté véhicule automobile (42), dans laquelle est réalisé un contrôle d'identification destiné à vérifier une autorisation de l'utilisateur,
**caractérisé en ce**
**qu'**un premier module de communication (20) est prévu, qui est disposé de manière autonome par rapport à l'unité électronique (12) à l'intérieur du boîtier (11) et qui émet en permanence un signal radio (3) qui peut être reçu par le système de sécurité, lequel détecte la présence du dispositif d'identification (10) sur le véhicule automobile (40).

2. Dispositif d'identification mobile (10) selon la revendication 1,
**caractérisé en ce**
**que** le signal radio (3) peut être reçu par un deuxième module de communication (30) qui est disposé côté véhicule automobile et qui est en communication de données avec le système de sécurité.

3. Dispositif d'identification mobile (10) selon la revendication 1 ou 2,
**caractérisé en ce**
**que** lors du contrôle d'identification, l'unité d'émission et de réception (13) reçoit un premier signal (1) généré à l'extérieur du dispositif d'identification (10) et le transmet à l'unité électronique (12), qui réalise un premier contrôle d'identification du premier signal (1) et, en cas de détection positive d'une identification, déclenche un deuxième signal (2) qui est envoyé par l'unité d'émission et de réception (13), reçu par unité d'émission et de réception côté véhicule automobile (42) et vérifié côté véhicule dans un deuxième contrôle d'identification.

4. Dispositif d'identification mobile (10) selon une des revendications précédentes,
**caractérisé en ce**
**que** le signal radio (3) se situe dans une gamme de fréquences f telle que 2,402 GHz ≤ f ≤ 2,480 GHz.

5. Dispositif d'identification mobile (10) selon une des revendications précédentes,
**caractérisé en ce**
**qu'**au moins un élément de déclenchement (14a, 14b) actionnable de l'extérieur, en communication de signal avec l'unité électronique (12) est prévu, le contrôle d'identification étant démarré en cas d'actionnement de l'élément de déclenchement (14a, 14b).

6. Dispositif d'identification mobile (10) selon une des revendications précédentes,
**caractérisé en ce**
**que** le premier module de communication (20) est fixé dans un logement (15) du boîtier (11), une clé de secours pouvant en particulier être insérée dans le logement (15) à la place du premier module de communication (20).

7. Dispositif d'identification mobile (10) selon une des revendications précédentes,
**caractérisé en ce**
**que** le premier module de communication (20) présente une unité d'émission (21) avec une alimentation en énergie (22).

8. Système de sécurité pour une activation sans clé d'un dispositif de fermeture (43) d'un véhicule automobile (40), comprenant un dispositif d'identification mobile (10) qui présente un boîtier (11) dans lequel est disposée une unité électronique (12) comprenant une unité d'émission et de réception (13) qui est en communication avec une unité d'émission et de réception (42) d'une unité électronique côté véhicule automobile, dans laquelle est réalisé un contrôle d'identification destiné à vérifier une autorisation de l'utilisateur,
**caractérisé en ce**
**qu'**un premier module de communication (20) est prévu, qui est disposé de manière autonome par rapport à l'unité électronique (12) à l'intérieur du boîtier (11) et qui émet en permanence un signal radio (3) qui peut être reçu par le système de sécurité, lequel détecte la présence du dispositif d'identification (10) sur le véhicule automobile (40).

9. Système de sécurité selon la revendication 8,
**caractérisé en ce**
**que** le signal radio (3) peut être reçu par un deuxième module de communication (30) qui est disposé côté véhicule automobile et qui est en communication de données avec le système de sécurité, le deuxième module de communication (30) faisant en particulier partie de l'unité électronique côté véhicule, l'unité d'émission et de réception côté véhicule automobile (42) étant réalisée de façon que celle-ci puisse recevoir et envoyer aussi bien le signal radio (3) que des signaux (1, 2) pour le contrôle d'identification, le deuxième module de communication (30) présentant en particulier une unité de réception (31) qui est disposée séparément de l'unité d'émission et de réception côté véhicule automobile (42) sur le véhicule automobile (40).

10. Système de sécurité selon la revendication 8,
**caractérisé en ce**
**que** l'unité d'émission et de réception (42) est intégrée dans une poignée (41).

11. Système de sécurité selon la revendication 8,
**caractérisé en ce**
**que** la portée du premier et du deuxième module de communication (20, 30) est réalisée de façon qu'une communication entre les deux modules (20, 30) soit possible seulement à moins de 2 m.

12. Système de sécurité selon la revendication 8,
**caractérisé en ce**
**que** l'unité d'émission et de réception (42) fait partie d'un système d'entrée sans clé actif existant, le système de sécurité présentant le fonctionnement d'un système d'entrée sans clé passif par intégration du premier module de communication (20).

13. Système de sécurité selon la revendication 8,
**caractérisé en ce**
**que** le deuxième module de communication (30) est disposé sur un élément extérieur du véhicule.

14. Système de sécurité selon une des revendications 8 à 13 comprenant un dispositif d'identification (10) selon une des revendications précédentes.

15. Procédé d'un système de sécurité pour une activation sans clé d'un dispositif de fermeture (43) d'un véhicule automobile (40), comprenant un dispositif d'identification mobile (10) qui présente un boîtier (11) dans lequel est disposée une unité électronique (12) comprenant une unité d'émission et de réception (13) qui est en communication avec une unité d'émission et de réception côté véhicule automobile (42), dans laquelle est réalisé un contrôle d'identification destiné à vérifier une autorisation de l'utilisateur,
**caractérisé en ce**
**que** le boîtier (11) présente un premier module de communication (20) qui est disposé de manière autonome par rapport à l'unité électronique (12) à l'intérieur du boîtier (11) et qui émet en permanence un signal radio (3) qui est reçu par un deuxième module de communication côté véhicule automobile (30) qui est en communication de données avec le système de sécurité, permettant ainsi au système de sécurité de détecter la présence du dispositif d'identification (10) sur le véhicule automobile (40).

16. Procède selon la revendication 15,
**caractérisé par** les étapes suivantes pour un processus d'entrée dans le véhicule automobile (40) :
(1) le signal radio (3) est reçu par le deuxième module de communication (30) seulement à une distance définie entre le premier et le deuxième module de communication (20, 30),
(2) le deuxième module de communication (30) déclenche une unité électronique côté véhicule automobile du système de sécurité,
(3) une communication bidirectionnelle est réalisée entre le dispositif d'identification (10) et l'unité électronique côte véhicule automobile pour le contrôle d'identification et
(4) en cas d'identification positive, le dispositif de fermeture (43) est activé.

17. Procédé selon la revendication 16,
**caractérisé en ce**
**que** lors de l'étape (3)
(a) l'unité électronique côté véhicule automobile génère un premier signal (1),
(b) le premier signal (1) est envoyé à l'unité d'émission et de réception (13) du dispositif d'identification (10) par l'unité d'émission et de réception (42),
(c) l'unité d'émission et de réception (13) transmet le premier signal (1) à l'unité électronique (12) du dispositif d'identification (10),
(d) l'unité électronique (12) réalise un premier contrôle d'identification,
(e) en cas de premier contrôle d'identification positif, l'unité électronique (12) génère un deuxième signal (2) qui est envoyé à l'unité d'émission et de réception côté véhicule automobile (42) par l'unité d'émission et de réception (13) du dispositif d'identification (10) et
(f) le deuxième signal (2) est transmis à de l'unité électronique côté véhicule qui réalise un deuxième contrôle d'identification.

18. Procédé selon la revendication 15,
**caractérisé en ce**
**que** lors du processus de sortie du véhicule automobile (40), le système de sécurité détecte dans quelle mesure le premier module de communication (20) se trouve hors de portée du véhicule et le dispositif de fermeture (43) est activé.

19. Procédé selon une des revendications précédentes pour faire fonctionner un système de sécurité selon une des revendications 8 à 14.
